# EUROPÄISCHE PATENTANMELDUNG

(11) **EP 1 326 349 A1**
(43) Veröffentlichungstag der Anmeldung: **09.07.2003**
(21) Anmeldenummer: 02014173.5
(22) Anmeldetag: 25.06.2002
(51) Int. Cl.: H04B 7/005, H04L 12/28, H04L 12/56

(54) **Verfahren zur Einstellung der Sendeleistung einer mobilen Station, sowie zugehöriges Funksystem und mobile Station**

(71) Anmelder: SIEMENS AKTIENGESELLSCHAFT, 80333 München (DE)
(72) Erfinder: Ebner, Andre, 21073 Hamburg (DE); Halfmann, Ruediger, 67697 Otterberg (DE); Lott, Matthias, 81477 München (DE); Rohling, Hermann, Prof., 38304 Wolfenbüttel (DE); Schulz, Egon, Dr., 80993 München (DE)

(57) **Zusammenfassung**

Die Erfindung betrifft ein Verfahren, ein Funksystem sowie eine mobile Station MS1 zur Einstellung der Sendeleistung der mobilen Station MS1, wobei die Sendeleistung S in Abhängigkeit von einer die mobile Station MS1 betreffenden Ortsinformation O eingestellt wird. Aus dieser Ortsinformation O können Rückschlüsse auf die Verkehrssituation, d. h. den mittleren Abstand zur nächsten Station, gezogen werden. Es erfolgt eine Anpassung der Sendeleistung S an die jeweilige Verkehrssituation. So kann beispielsweise in einem Ad-hoc-Netz die Sendeleistung S immer so gewählt werden, daß nur eine Mindestanzahl von weiteren Stationen in Reichweite der mobilen Station MS1 liegen. Interferenzen werden so minimiert und eine Überlastung des Funknetzes wird verhindert.

## Beschreibung

Die Erfindung betrifft ein Verfahren zur Einstellung der Sendeleistung einer mobilen Station, sowie ein entsprechendes Funksystem und eine entsprechende mobile Station.

In mobilen Kommunikationssystemen wie zum Beispiel GSM oder UMTS Systemen wird die Sendeleistung der Kommunikationspartner bezüglich der Qualität der Verbindung optimiert. Hierzu werden Regelmechanismen eingesetzt, die beispielsweise die Sendeleistung so einstellen, daß eine gewünschte Bitfehlerrate und/oder ein bestimmter Empfangspegel erreicht wird.

In Ad-hoc-Netzen (auch selbstorganisierende Netze genannt) sind mehrere Netzstationen in der Lage, ohne eine vermittelnde zentrale Einrichtung eine Funkverbindung untereinander aufzubauen. Die Verbindung zwischen zwei Stationen erfolgt dabei entweder direkt oder bei größeren Entfernungen über weitere gleichartige Stationen, die für diese Verbindung Relaisstationen bilden. Diese selbstorganisierenden Netze sind beispielsweise die Wireless Local Area Networks (WLANs) wie HiperLAN und IEEE 802.11. Anwendung finden solche Netze nicht nur in den üblichen Internet- und Telematikbereichen sondern auch im Bereich der Inter-Fahrzeugkommunikation, wie z. B. bei Systemen zur Gefahrenwarnungen oder kooperativen Fahrerassistenzsystemen.

Ein besonderer Vorteil von Ad-hoc-Netzen liegt in ihrer großen Mobilität und Flexibilität. An beliebigen Orten können Funkverbindungen zwischen Stationen aufgebaut werden, ohne von festinstallierten Basisstationen oder einer festgelegten Funknetzplanung abhängig zu sein. Verbindungen von einer Station zu einer Zielstation können dabei entweder direkt oder mittels Relaisstationen über eine Vielzahl möglicher Wege realisiert werden. Die große Mobilität der einzelnen, das Ad-hoc-Netz bildenden Stationen impliziert jedoch auch, daß sich für einen Teilnehmer in einem Ad-hoc-Netz sehr schnell seine Umgebungsbedingungen verändern können. Wird dann mit einer zu großen Leistung gesendet, kommt es verstärkt zu Interferenzen verschiedener Verbindungen und die Empfangsqualität der einzelnen Verbindungen wird reduziert.

Die Wahl des Wertes der Sendeleistung einer mobilen Station bestimmt zum einen die Stärke der Interferenzen mit anderen Stationen und legt zum anderen die Reichweite der Funksignale dieser mobilen Station fest. Je größer der Wert der Sendeleistung gewählt wird, um so größer ist die Reichweite und um so mehr Teilnehmer können erreicht werden. Die Stationen, aus denen ein Ad-hoc-Netz gebildet wird, teilen sich alle die begrenzt zur Verfügung stehende Bandbreite des Funksystems, so daß bei einer großen Anzahl von Stationen die maximale Übertragungskapazität schneller erreicht wird als bei einer kleinen Anzahl.

Bei HiperLAN 1 wird in vorgegebenen Leistungsklassen gesendet (siehe das Standard-Dokument EN 652 V1.2.1, Kapitel 9.8.1.6). Für jede Leistungsklasse ist ein Wert der Sendeleistung festgelegt. Diesen Wert kann die sendende Station nach Belieben um einige Dezibel variieren. Ist für eine Verbindung keine Leistungsregelung vorgesehen, so wird ein fester Wert für die Sendeleistung gewählt. Bei Verbindungen mit Leistungsregelung erfolgt diese typischerweise wie bei GSM und UMTS. Ausgehend von dem bei Verbindungsaufbau gewählten Wert der Sendeleistung erfolgt eine Änderung der Sendeleistung, bis die gewünschte Verbindungsqualität erreicht wird. In welcher Leistungsklasse und mit welchem festen Wert der Sendeleistung gesendet wird bzw. welcher Anfangswert der Sendeleistung bei Verbindungsaufbau im Fall einer Leistungsregelung gewählt wird, ist in den Standards nicht näher spezifiziert. Es fehlen also Kriterien, anhand derer ein günstiger Wert der Sendeleistung gewählt werden kann.

Bei IEEE 802.11 existieren keine Leistungsklassen wie bei HiperLAN 1 und 2. Die mobilen Stationen senden üblicherweise mit der im Standard vorgesehenen maximalen Leistung. Eine Leistungsregelung ist nicht vorgesehen.

Der Erfindung liegt daher die Aufgabe zugrunde, ein vorteilhaftes Verfahren zur Einstellung der Sendeleistung in Ad-hoc-Netzen anzugeben.

Diese Aufgabe wird mit dem Verfahren gemäß Anspruch 1, dem Funksystem gemäß Anspruch 11 sowie der mobilen Station für ein Funksystem gemäß Anspruch 12 gelöst.

Vorteilhafte Aus- und Weiterbildungen der Erfindung sind Gegenstand der abhängigen Ansprüche.

Erfindungsgemäß wird die Sendeleistung einer mobilen Station in einem Funksystem vorteilhaft in Abhängigkeit von einer die mobile Station betreffenden Ortsinformation eingestellt. Die Erfindung beruht dabei auf der Erkenntnis, daß an verschiedenen Orten unterschiedliche und für den jeweiligen Ort typische Funkausbreitungsbedingungen und Teilnehmerkonzentrationen herrschen, d. h. die Dichte der potentiellen Verbindungspartner bzw. der mittlere Abstand zum nächsten Nachbarn ist ortspezifisch. Weiterhin können die Ausbreitungsbedingungen verschieden sein. Kann auf Autobahnen davon ausgegangen werden, daß oft ein direkter Pfad (Line-of-Sight, LOS) zwischen. Sender und Empfänger besteht, so ist in städtischen Umgebungen dieser direkte Pfad oft durch Hindernisse, wie z. B. Gebäude, versperrt (Non-Line-of-Sight, NLOS) Die erfindungsgemäße Ortsinformation erlaubt es, für jeden Ort die wahrscheinlichste Teilnehmerdichte und/oder die Funkausbreitungsbedingungen bei der Einstellung der Sendeleistung zu berücksichtigen. Bei schlechten Funkausbreitungsbedingungen und/oder bei hoher Wahrscheinlichkeit einer kleinen Dichte von weiteren Stationen oder eines großen Abstands zum nächsten Nachbarn wird eine größere Sendeleistung gewählt als bei guten Funkausbreitungsbedingungen und/oder hoher Wahrscheinlichkeit einer großen Dichte bzw. eines kleinen mittleren Abstands zum nächsten Nachbarn.
Ändert sich der Ort der mobilen Station, so kann damit eine Änderungen der Funkausbreitungsbedingungen und/oder Teilnehmerdichte bzw. des mittleren Abstands zum nächsten Nachbarn verbunden sein. Die Erfindung ermöglicht es, die Sendeleistung an die sich ändernden Verbindungsbedingungen anzupassen, um dadurch eine optimale Verbindungen zu haben. Mit einer Änderung des Ortes ist häufig auch eine Änderung der der mobilen Station nächstgelegenen Stationen verbunden, so daß sich für Verbindungen zu gewünschten Zielstationen günstigere Wege ergeben, für die neue Verbindungen aufgebaut werden. Auch für diese neuen Verbindungen kann aufgrund der erfindungsgemäßen Ortsinformation ein geeigneter Wert der Sendeleistung eingestellt werden.

Die Ortsinformation ist nach einer ersten Ausführungsform der Erfindung vorteilhafter Weise von der geografische Position der mobilen Station abhängig. Die Stationsdichte und daher der mittlere Abstand zur nächsten weiteren Station und/oder die Funkausbreitungsbedingungen hängen von der geografischen Position der mobilen Station ab, so daß eine Information über die geografische Position der mobilen Station vorteilhaft zur Einstellung der Sendeleistung verwendet werden kann. Die geografische Position kann beispielsweise mit einer Tabelle kombiniert werden, die jeder geografischen Position einen Wert der Sendeleistung zuordnet. Ebenso kann durch Kombination mit einer Landkarte jeder geografischen Position ein Wert der Sendeleistung zugeordnet werden, wobei anhand der Landkarte auf die an der jeweiligen geografischen Position anzunehmende Dichte von weiteren Stationen geschlossen werden kann. Die Bestimmung der geografischen Position läßt sich mittels eines GPS-Empfängers durchführen.

Die Ortsinformation ist in einer zweiten Ausführungsform der Erfindung vorteilhaft abhängig davon, in welcher Art von Umgebung sich die mobile Station befindet. Unterschieden werden kann hier vorteilhaft z. B. zwischen einer Stadt, einem Dorf, einem Waldstück oder Feld, da in solchen Umgebungen jeweils verschiedene mittlere Abstände zum nächsten Nachbarn anzutreffen sind bzw. typische Funkausbreitungsbedingungen vorherrschen. Die Art der Umgebung könnte beispielsweise auch "Hochhaus", "Auto" oder "Flugzeug" sein. Im Falle der Umgebung "Hochhaus" wäre die Sendeleistung am kleinsten zu wählen, da sich hier die nächstgelegene weitere Station üblicherweise im Haus, also nur wenige Meter entfernt, befindet, während bei einem Auto der Abstand zur nächsten mobilen Station, die sich in der Regel auch in einem Auto befinden wird, eher einige Meter und bei einem Flugzeug sogar einige Kilometer betragen wird. Die Umgebung "Flugzeug" hätte daher die größte Sendeleistung zur Folge.

Nützlich ist ferner, wenn die Ortsinformation davon abhängt, auf welcher Art von Verkehrsweg und/oder in der Nähe welcher Art von Verkehrsweg sich die mobile Station befindet. Hilfreich ist dabei beispielsweise die Information, ob sich die mobile Station auf einer städtischen Straße, auf einer Landstraße oder auf einer Autobahn befindet, da auf den verschiedenen Arten von Verkehrswegen in der Regel unterschiedliche Verkehrsdichten der Teilnehmer und/oder Funkausbreitungsbedingungen vorherrschen.

Eine bevorzugte Ausführungsform der Erfindung verwendet zusätzlich zur Ortsinformation die Geschwindigkeit der mobilen Station, um die Sendeleistung einzustellen. Auf diese Weise läßt sich auch noch die tatsächliche Verkehrssituation (fließender oder stehender Verkehr) vorteilhaft für die Einstellung der Sendeleistung verwenden. Bei stehendem Verkehr wird häufig die Teilnehmerdichte höher sein als bei fließendem Verkehr.

Bei einer weiteren vorteilhaften Weiterbildung der Erfindung wird die Sendeleistung zusätzlich in Abhängigkeit von der Art der Anwendung geregelt, deren Daten von der betreffenden mobilen Station gesendet werden. Für bestimmte Anwendungen wie Warnmeldungen (Emergency Calls), die beispielsweise von mobilen Stationen, die sich in Kraftfahrzeugen befinden, z.B. bei einer Notbremsung an mobile Stationen nachfolgender Fahrzeuge gesendet werden, läßt sich die benötigte Mindestsendeleistung unmittelbar als Funktion der Fahrzeuggeschwindigkeit der Nachfolgefahrzeuge darstellen.

In einer weiteren Ausgestaltung der Erfindung werden Ortsinformation und/oder Geschwindigkeit und/oder die Art der Anwendung in der mobilen Station bestimmt. Die mobile Station ist so unabhängig von externen Komponenten und kann selbstständig die Sendeleistung bestimmen.

Von Vorteil kann aber auch die Übermittlung der Ortsinformation und/oder der Geschwindigkeit und/oder der Art der Anwendung an die mobile Station sein. Auf diese Weise kann die mobile Station durch den Wegfall einer Einheit, welche die Ortsinformation und die Geschwindigkeit und die Art der Anwendung ermittelt, wesentlich kompakter gebaut werden. Eine solche Einheit ist dann extern von der mobilen Station angeordnet. Sie kann, falls es sich bei der Ortsinformation um die geografische Position handelt, in bereits bestehende Systeme, die (wie beispielsweise Autonavigationssysteme) bereits mit einem GPS-Empfänger ausgerüstet sind, integriert werden.

Darüber hinaus kann der mobilen Station vorteilhaft von einer externen Einheit ein Steuersignal zur Einstellung der Sendeleistung übermittelt werden, das aus der Ortsinformation und/oder der Geschwindigkeit und/oder der Art der Anwendung ermittelt wird. Die mobile Station spart so zusätzlich zur im vorherigen Absatz geschilderten Weiterbildung die Rechenleistung, die zur Bestimmung der Sendeleistung aus der Ortsinformation und/oder der Geschwindigkeit benötigt wird. Eine noch kompaktere Bauweise sowie Energieeinsparungen sind so möglich.

Zur Minimierung von Interferenzen und zur Optimierung der erreichbaren Teilnehmerzahl ist es günstig, eine untere Schranke und/oder eine obere Schranke für die Sendeleistung festzulegen. Die untere und obere Schranke werden in Abhängigkeit von der Ortsinformation gewählt. Eine untere Schranke dient dazu, daß bei Rundaussendungen (Broadcast) eine Mindestanzahl von Teilnehmern mit einer hohen Wahrscheinlichkeit erreicht werden kann. Da oft keine geschlossene Leistungsregelung für den Rundsenderuf möglich ist, kann die Sendeleistung meist nicht auf die Ausbreitungsbedingungen zu den Empfängern geregelt werden. Durch die Wahl einer größeren bzw. kleineren Leistung werden mehr oder weniger Stationen erreicht. Gleichzeitig werden auch die Interferenzen entsprechend angehoben bzw. verringert. Je geringer die Sendeleistung gewählt wird desto weniger Verbindungen werden gestört. Das betrifft insbesondere solche Verbindungen, die außerhalb der Detektionsreichweite des Senders betrieben werden, die aber durch das gleichzeitige Senden gestört werden. Der Sender ist dann eine sogenannte versteckte Station (Hidden Station). Eine aus der Ortsinformation abgeleitete geringe Dichte an.Teilnehmerstationen erfordert generell höhere Werte für die Schranken als eine hohe Dichte an Teilnehmerstationen. Selbstverständlich kann auch ein fester Wert der Sendeleistung definiert werden, indem beispielsweise die untere und obere Schranke auf den gleichen Wert gesetzt werden.

Sieht die Verbindung eine Leistungsregelung vor, würde ohne obere Schranke für eine sich von der mobilen Station entfernende weitere Station die Sendeleistung immer größer gewählt werden, um so die Verbindungsqualität zu wahren, wobei dadurch gleichzeitig immer größere Interferenzen entstünden. Ab einer festzulegenden Entfernung bzw. Sendeleistung ist es günstiger, die gewünschte Zielstation über einen anderen Weg zu erreichen, d. h. die Verbindung über eine nähergelegene Station mit einer aufgrund der geringeren Entfernung kleineren Sendeleistung zu wählen. Eine untere Schranke für die Sendeleistung ist vorteilhaft zu wählen, um die beim Empfänger ankommende Leistung und damit die Qualität der Verbindung nicht unter ein Mindestmaß fallen zu lassen. Ohne Leistungsregelung kann die obere Schranke den gleichen Wert wie die untere Schranke erhalten. Eine Ausreichende Qualität der Verbindung ist dann gemäß den vorherigen Ausführungsformen der Erfindung durch die geeignete Wahl dieses Wertes gesichert.

Das Funksystem und die mobile Station sind mit den für die Durchführung des Verfahrens notwendigen Komponenten ausgestattet.

Die Erfindung wird im folgenden anhand von in den Figuren dargestellten Ausführungsbeispielen näher erläutert. Es zeigen:
- Figuren 1a-c: verschiedene Ausführungsbeispiele eines erfindungsgemäßen Funksystems, das exemplarisch die Verbindung zwischen zwei mobilen Stationen zeigt,
- Figuren 2a,b: unterschiedliche Verkehrswege, auf denen sich die mobilen Stationen des Funksystems aus Figur 1a-c bewegen.

Die Erfindung wird im folgenden anhand eines Ad-hoc-Netzes, wie es bei Wireless Local Area Networks wie Hyperlan und IEEE 802.11 verwendet wird, erläutert, obwohl sie auch auf zellulare Mobilfunksysteme wie GSM oder UMTS anwendbar ist. Die Erfindung ist aber auch auf andere Funksysteme mit mobilen Stationen anwendbar.

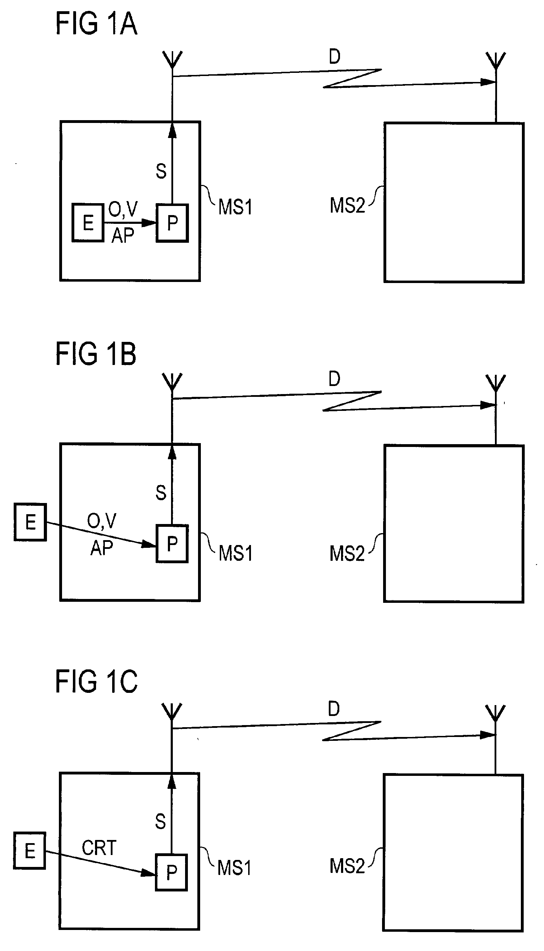

In den Funksystemen der Figuren 1a-c ist eine mobile Station MS1 mit einer Einheit P zur Leistungsregelung dargestellt. Eine Einheit E dient der Bestimmung einer Ortsinformation O und der Geschwindigkeit V der mobilen Station MS1. Gezeigt ist weiterhin exemplarisch eine nächstgelegene weitere mobile Station MS2, mit der die mobile Station MS1 eine Verbindung aufbauen will oder aufgebaut hat. Üblicherweise wird eine mobile Station MS1 mit mehreren weiteren mobilen Stationen MSi Verbindungen besitzen bzw. die Verbindung zu einer weiteren mobilen Station MS2 über mehrere mobile Stationen MSi, die als Relaisstationen fungieren, aufbauen. Die Sendeleistung S, mit der Daten D von der mobilen Station MS1 zur weiteren mobilen Station MS2 übertragen werden, wird nun anhand der Ortsinformation O bestimmt. Dabei wird der Zusammenhang zwischen dem durch die Ortsinformation O bezeichneten Ort und der für diesen Ort typischen Teilnehmerkonzentration, d. h. der wahrscheinlichsten Teilnehmerdichte bzw. dem wahrscheinlichsten mittleren Abstand zur nächsten Station zur Einstellung der Sendeleistung ausgenutzt.

Obwohl das bisherige Ausführungsbeispiel und auch die folgenden Ausführungen die Verbindung der mobilen Station MS1 zu weiteren mobilen Stationen MSi beschreiben, kann es sich bei den Stationen, mit denen die mobile Station MS1 eine Verbindung hat, ganz oder teilweise auch um raumfeste Stationen wie beispielsweise die Basisstationen eines zellularen Mobilfunksystems handeln.

Um eine Mindestqualität für die Verbindung zwischen den mobilen Stationen MS1 und MS2 zu gewährleisten, wird für die Sendeleistung je nach Ortsinformation O ein Mindestwert, d. h. eine untere Schranke festgesetzt. Ergibt die Ortsinformation O, daß eine geringe Teilnehmerdichte am Ort der mobilen Station MS1 anzunehmen ist, so wird eine größere untere Schranke gewählt als bei einer großen Teilnehmerdichte. Ist eine Leistungsregelung für die Verbindung vorgesehen, wird auch eine obere Schranke für die Sendeleistung festgelegt. Für die obere Schranke gilt analog zur unteren Schranke, daß ein hoher Wert gewählt wird, falls die Ortsinformation zur Annahme einer kleinen Teilnehmerdichte führt. Durch die Wahl einer oberen Schranke wird verhindert, daß die Sendeleistung bei sich voneinander entfernenden mobilen Stationen MS1 und MS2 durch bekannte Mechanismen zur Leistuhgsregelung immer größer gewählt wird und so immer stärkere Interferenzen mit weiteren Stationen die Qualität der Verbindung zunehmend verschlechtern. In solch einer Situation wäre es günstig, die Verbindung zwischen MS1 und MS2 über eine weitere, der mobilen Station MS1 nähergelegene mobile Station durchzuführen. Für diese Verbindung kann dann eine Sendeleistung S eingestellt werden, die in dem durch die untere und obere Schranke festgelegten Intervall liegt. Ist eine Verbindung zur mobilen Station MS2 über weitere mobile Stationen nicht möglich, so ist es gegebenenfalls vorteilhaft, die Verbindung zur mobilen Station MS2 sogar abzubrechen, um nicht die Verbindungen anderer Stationen zu stark zu stören. Ist für eine Verbindung keine Leistungsregelung vorgesehen oder möglich, wird anhand der Ortsinformation O ein fester Wert der Sendeleistung gewählt, der die wahrscheinlichste Teilnehmerdichte berücksichtigt und so in der Regel eine gute Verbindungsqualität bei gleichzeitig geringen Interferenzen sicherstellt. Dies ist gleichbedeutend damit, daß untere und obere Schranke auf den gleichen Wert gesetzt werden.

Die Ortsinformation O ist beispielsweise die geografische Position der mobilen Station MS1, so daß aus einer gespeicherten Tabelle die Sendeleistung S in Abhängigkeit dieser geografischen Position gewählt werden kann. Diese Tabelle ist in derjenigen Einheit gespeichert, in der Steuersignale für die Einstellung der Sendeleistung S erzeugt werden. Gebiete, die nur von Wasser umgeben sind oder in denen keine Zivilisation vorhanden ist, würden z. B. eine möglichst große Sendeleistung S erfordern. In Gebieten mit hoher Bevölkerungsdichte hingegen, ist eine relativ kleine Sendeleistung S bereits ausreichend, um die weitere mobile Station MS2 zu erreichen. Bei der Einheit E zur Bestimmung der Ortsinformation O kann es sich auch um ein System zur Positionsbestimmung handeln, das z. B. einen GPS-Empfänger enthält.

Die Ortsinformation kann alternativ auch statt einer geografischen Positionsangabe in einer Angabe über die Art der Umgebung bestehen, in der sich die mobile Station MS1 befindet. Unterschiedliche Arten von Umgebung sind z. B. ländliche Gebiete oder Städte. In diesen Umgebungen lebt eine für die jeweilige Umgebung typische Anzahl von Menschen und damit haben diese Umgebungen eine verschiedene Anzahl der potentiellen weiteren mobilen Stationen bzw. verschiedene mittlere Abstände zum nächstgelegenen Nachbarn. Die Art der Umgebung gibt nun direkt an, welche Sendeleistung eingestellt wird. Die Verwendung einer Tabelle wie bei der Verwendung der geografischen Position als Ortsinformation entfällt. Stattdessen kann eine Tabelle verwendet werden, in der der durch die Ortsinformation signalisierten Art der Umgebung ein entsprechender Wert der Sendeleistung zugeordnet ist.

Sinnvoll ist es, bei der Art der Umgebung auch zwischen Autobahnen, Schnellstraßen, und gewöhnlichen Straßen in einer Stadt zu unterscheiden. Auf Autobahnen haben die mobilen Stationen üblicherweise einen wesentlich größeren Abstand als auf den Straßen in einer Stadt. Auf welcher Art von Verkehrsweg sich die mobile Station MS1 befindet, kann der mobilen Station MS1 z. B. durch ein Signal einer Mautstation der Straße oder einer ähnlichen Einrichtungen angegeben werden. Natürlich ist die Art der Umgebung auch aus der geografischen Position ermittelbar. Die Verknüpfung der geografischen Position mit einer elektronisch gespeicherten Landkarte (wie in Fahrzeugnavigationssystemen) ermöglicht hierbei, die Art der Umgebung und somit auch die Art des Verkehrsweges zu bestimmen.

Die Ortsinformation O erhält die mobile Station MS1 von der Einheit E, die sowohl in die mobile Station MS1 integriert (Figur 1a) als auch außerhalb der mobilen Station MS1 angeordnet sein kann (Figur 1b). Bei den Figuren 1a,b werden, nach Übermittlung der Ortsinformation O und der Geschwindigkeit V, Steuersignale zur Einstellung der Sendeleistung in der Einheit P erzeugt. Anstatt die Ortsinformation O und die Geschwindigkeit V an die mobile Station MS1 weiterzuleiten, kann auch direkt in der Einheit E ein Steuersignal CRT basierend auf der Ortsinformation O und der Geschwindigkeit V generiert werden, das an die mobile Station MS1 übermittelt und dort zur Einstellung der Sendeleistung S verwendet wird (Figur lc). Die Einheit E könnte beispielsweise in ein Fahrzeug integriert sein und das Steuersignal CRT dann an die mobile Station des jeweiligen Autofahrers übermitteln. Denkbar ist auch eine Übermittlung des Steuersignals CRT an die Einheit P der mobilen Station MS1 über eine Funkverbindung. So könnte die Einheit E beispielsweise in der weiteren mobilen Station MS2 sitzen. Ist für die Verbindung eine Leistungsregelung vorgesehen, werden Steuersignale von der weiteren mobilen Station MS2 an die mobile Station MS1 übermittelt. Durch Integration der Einheit E in die weitere mobile Station MS2 wird aufwandsmindernd das Steuersignal CRT der Einheit E mit den üblichen Steuersignalen zur Leistungsregelung kombiniert.

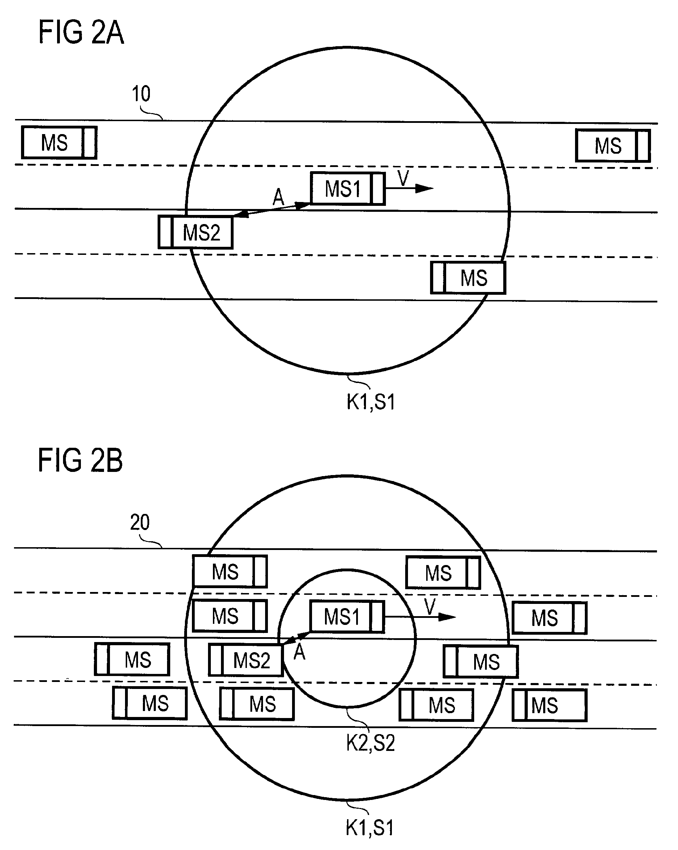

In den Figuren 2a,b sind die mobilen Stationen MS1 und MS2 der Figuren 1a-c in Autos integriert, die sich mit anderen mobilen Stationen MS, die auch Bestandteile des Ad-hoc-Netzes sind, auf verschiedenen Arten von Straßen fortbewegen. Figur 2a zeigt eine Verkehrssituation auf einer Autobahn 10. Die mobilen Stationen MS, MS1 und MS2 haben dort einen größeren Abstand zum nächsten Nachbarn als im Stadtverkehr, der in Figur 2b auf einer städtischen Straße 20 dargestellt ist. Auf Autobahnen ist in der Regel sowohl das Verkehrsaufkommen als auch die Geschwindigkeit der mobilen Stationen anders als im Stadtverkehr, woraus im Normalfall ein größerer Abstand der mobilen Stationen resultiert. In den beiden Figuren 2a,b ist exemplarisch der Abstand A zwischen den beiden mobilen Stationen MS1 und MS2 eingezeichnet. Ebenfalls eingezeichnet ist ein Kreis K1, der die Reichweite der Station MS1 für eine feste Sendeleistung S1 darstellt. Der zweite Kreis K2 in Figur 2b entspricht einer geringeren Sendeleistung S2. Bei hohem Verkehrsaufkommen befinden sich bei gleicher Sendeleistung S1 mehr Stationen in Reichweite der Station MS1 als bei niedrigem Verkehrsaufkommen, so daß auch die Auslastung der Bandbreite des Mobilfunksystems bei hohem Verkehrsaufkommen größer ist. Eine Änderung der Sendeleistung bewirkt daher immer auch eine Änderung der Anzahl der erreichbaren Stationen.

Denkbar ist natürlich auch die Situation, daß auf der Autobahn ein Stau entsteht. In diesem Fall ergäbe sich auch auf der Autobahn 10 ein Bild wie in Figur 2b. Um dieser Möglichkeit Rechnung zu tragen, wird neben der Ortsinformation O auch die Geschwindigkeit V der Fahrzeuge bei der Einstellung der Sendeleistung der mobilen Station MS1 berücksichtigt. Auf diese Weise kann bei Staubildung von der üblicherweise relativ hohen Sendeleistung S1 auf eine kleinere Sendeleistung S2 umgeschaltet werden, um so die Interferenzen zu minimieren und die Auslastung des Netzes, d. h. die Anzahl der erreichbaren Stationen zu optimieren. Gleichzeitig wird mit der kleineren Sendeleistung S2 Energie eingespart.

Weiterhin besteht nach einer unabhängigen erfinderischen Idee unabhängig vom Vorsehen und Berücksichtigen der oben beschriebenen Ortsinformation oder zusätzlich zu dieser die Möglichkeit, die Sendeleistung in Abhängigkeit von der Art der Anwendung AP (d.h. den Dienst) zu regeln, deren Daten von der betreffenden mobilen Station gesendet werden. Die Mindestreichweite sogenannter Warnmeldungen (Emergency Calls), die bei mobilen Stationen, die sich in Kraftfahrzeugen befinden, z.B. eine Notbremsung nachfolgender Fahrzeuge einleiten, lässt sich unmittelbar als Funktion der Fahrzeuggeschwindigkeit der Nachfolgefahrzeuge darstellen. Damit kann die Sendeleistung vorteilhaft sowohl in Abhängigkeit von der Geschwindigkeit als auch von der Art der Anwendung AP eingestellt werden. Bei einer "Platooning" genannten Anwendung, bei der der Fahrzeugabstand und die Fahrzeuggeschwindigkeit eines Fahrzeugverbandes automatisch angepasst werden, wird die Sendeleistung zusätzlich zur anwendungsspezifischen Festlegung auch aufgrund der Lage des Fahrzeugverbandes, d.h. der daran beteiligten Kommunikationspartner, eingestellt werden.

Kennt die mobile Station MS1 aufgrund einer entsprechenden Ortsinformation O die typischen Verkehrsbedingungen an ihrer aktuellen Position, so kann sie ihre Sendeleistung S an diese Verkehrssituation anpassen. Ist keine Leistungsregelung für die Verbindung vorgesehen, kann trotzdem ein sinnvoller Wert der Sendeleistung eingestellt werden. Bei einer Verbindung mit Leistungsregelung wird ein sinnvoller Wert der Sendeleistung bereits beim Verbindungsaufbau gewählt. Nach Verbindungsaufbau wird die Sendeleistung sowohl in Abhängigkeit von der Ortsinformation O und der Geschwindigkeit V, die einen Richtwert für die Leistung vorgeben, als auch in Abhängigkeit von den üblichen Regelmechanismen eingestellt. Übliche Regelmechanismen bestimmen die Qualität der Verbindung empfangsseitig und übermitteln entsprechende Signale zur Leistungssteuerung an den Sender (geschlossener Regelkreis).

In einer weiteren unabhängigen erfinderischen Idee wird die Sendeleistung unabhängig von der oben beschriebenen Ortsinformation und/oder der Geschwindigkeitsinformation und/oder der Art der Anwendung oder zusätzlich zu diesen Kriterien in Abhängigkeit von der Anzahl der Stationen in Funkreichweite eingestellt. Hierzu hört die mobile Station die Funksignale umliegender Stationen ab, insbesondere Broadcast-Signale mit Informationen über die Sendeleistungen der abgehörten Stationen, und ermittelt aus den empfangenen Signalen die Anzahl der erreichbaren Stationen.

Durch das Abhören der Funksignale kann ein Teilnehmer seine potentiell erreichbaren Kommunikationspartner sowie deren zugehörige Empfangsleistung feststellen. Übermitteln die Kommunikationspartner zusätzlich ihre Sendeleistung, läßt sich jedem potentiellen Link ein "Link-Budget" zuordnen. Ermittelte "Link-Budgets" einerseits und die maximale Anzahl der Teilnehmer andererseits legen die Sendeleistung des Teilnehmers fest.

## Patentansprüche

1. Verfahren zur Einstellung der Sendeleistung (S) einer mobilen Station (MS1) in einem Funksystem, bei dem
- die Sendeleistung (S) in Abhängigkeit von einer die mobile Station (MS1) betreffenden Ortsinformation (O) eingestellt wird.

2. Verfahren nach Anspruch 1, bei dem die Ortsinformation von der geografische Position der mobilen Station (MS1) abhängig ist.

3. Verfahren nach einem der vorstehenden Ansprüche, bei dem die Ortsinformation (O) davon abhängt, welcher Art die Umgebung ist, in der sich die mobile Station (MS1) befindet.

4. Verfahren nach Anspruch 4, bei dem die Ortsinformation (O) davon abhängig ist, auf welcher Art von Verkehrsweg und/oder in der Nähe welcher Art von Verkehrsweg (10,20) sich die mobile Station (MS1) befindet.

5. Verfahren nach einem der vorstehenden Ansprüche, bei dem die Sendeleistung (S) zusätzlich in Abhängigkeit von der Geschwindigkeit (V) der mobilen Station (MS1) bestimmt wird.

6. Verfahren nach einem der vorstehenden Ansprüche, bei dem die Sendeleistung (S) zusätzlich in Abhängigkeit von der Art der Anwendung (AP) von von der mobilen Station (MS1) ausgesendeten Signalen bestimmt wird.

7. Verfahren nach einem der vorstehenden Ansprüche, bei dem die Ortsinformation (O) und/oder die Geschwindigkeit (V) und/oder die Art der Anwendung (AP) in der mobilen Station (MS1) bestimmt wird.

8. Verfahren nach einem der Ansprüche 1 bis 6, bei dem die Ortsinformation (O) und/oder die Geschwindigkeit (V) und/oder die Art der Anwendung (AP) an die mobile Station (MS1) übermittelt wird.

9. Verfahren nach einem der Ansprüche 1 bis 6, bei dem aus der Ortsinformation (O) und/oder der Geschwindigkeit (V) und/oder die Art der Anwendung (AP) ein Steuersignal (CRT) für die Sendeleistung (S) ermittelt wird, das an die mobile Station (MS1) übermittelt wird.

10. Verfahren nach einem der vorstehenden Ansprüche, bei dem für die Sendeleistung (S) in Abhängigkeit der Ortsinformation (O) eine untere Schranke und/oder eine obere Schranke festgelegt wird.

11. Funksystem mit einer mobilen Station (MS1)
- mit einer Einrichtung (P) zum Einstellen der Sendeleistung (S) der mobilen Station (MS1)
- bei dem die Einrichtung (P) die Sendeleistung (S) in Abhängigkeit von einer die mobile Station (MS1) betreffenden Ortsinformation (O) einstellt.

12. Mobile Station (MS1) für ein Funksystem
- mit einer Einrichtung (P) zum Einstellen der Sendeleistung (S) der mobilen Station (MS1)
- bei der die Einrichtung (P) die Sendeleistung (S) in Abhängigkeit von einer die mobile Station (MS1) betreffenden Ortsinformation (O) einstellt.
